# DEMANDE DE BREVET EUROPEEN

(11) **EP 4 184 784 A1**
(43) Date de publication de la demande: **24.05.2023**
(21) Numéro de dépôt: 22209025.0
(22) Date de dépôt: 23.11.2022
(51) Int. Cl.: H02P 9/08, H02J 7/34, H02J 3/38, H02J 3/32, H02J 15/00

(54) **PROCÉDÉ DE DÉMARRAGE D'UNE MACHINE ÉLECTRIQUE ET DISPOSITIFS ASSOCIÉS**

(30) Priorité: 23.11.2021 FR 2112386
(71) Demandeur: Powidian, 37700 La Ville aux Dames (FR)
(72) Inventeur: WAGNER WILHELM, Delphine, 37700 LA-VILLE-AUX-DAMES (FR)
(74) Mandataire: Lavoix

(57) **Abrégé**

La présente invention concerne un procédé de démarrage d'une machine électrique (16) alimentée en puissance réactive par un onduleur d'au moins une batterie, le procédé comportant, lors du démarrage de la machine électrique (16), une étape d'apport en puissance réactive additionnelle à la machine électrique (16) à l'aide d'un onduleur d'une pile à combustible, l'onduleur de la pile à combustible et la pile à combustible formant un bloc de pile à combustible, l'au moins une batterie et l'onduleur de l'au moins une batterie formant un dispositif de stockage d'énergie batterie, le bloc de pile à combustible et le dispositif de stockage d'énergie batterie faisant partie d'un même système d'alimentation en énergie électrique (14).

## Description

La présente invention concerne un procédé de démarrage d'une machine électrique. Elle se rapporte également à un système d'alimentation en énergie électrique et une installation associés.

Dans le monde, 10000 îles habitées par un total de 750 millions de personnes sont alimentées par l'électricité de générateurs diesel. Des milliers de communautés de montagne sont dans le même cas. Les contraintes environnementales conduisent à chercher des substituts à ces générateurs utilisés lorsque le réseau électrique est absent.

Dans le cadre d'un projet européen appelé REMOTE (acronyme de « Remote areas Energy supply with Multiple Options for integrated hydrogen-based Technologies » signifiant littéralement options multiples pour des technologies intégrées basées sur l'hydrogène d'alimentation en énergie de zones éloignées), il a été proposé d'étudier la faisabilité technique et économique de solutions basées sur le stockage d'hydrogène pour alimenter en énergie verte des sites isolés.

En particulier, dans les îles Froan, il a été installé une station autonome en énergie disposant en entrée de sources renouvelables locales solaire et éolienne pour combler les besoins en énergie. Dans une telle station autonome, des batteries servent de stockage à court terme tandis que l'électrolyseur produit de l'hydrogène pour le stocker sur le long terme et la pile à combustible utilise l'hydrogène stocké pour produire l'électricité en cas de besoin.

Toutefois, en pratique, il s'avère que les coupures de courant sont très fréquentes avec cette installation.

Il existe donc un besoin pour un procédé permettant de réduire les coupures de courant d'une telle station autonome.

A cet effet, la description décrit un procédé de démarrage d'une machine électrique alimentée en puissance réactive par un onduleur d'au moins une batterie, le procédé comportant, lors du démarrage de la machine électrique, une étape d'apport en puissance réactive additionnelle à la machine électrique à l'aide d'un onduleur d'une pile à combustible, l'onduleur de la pile à combustible et la pile à combustible formant un bloc de pile à combustible, l'au moins une batterie et l'onduleur de l'au moins une batterie formant un dispositif de stockage d'énergie batterie, le bloc de pile à combustible et le dispositif de stockage d'énergie batterie faisant partie d'un même système d'alimentation en énergie électrique.

Il est ainsi proposé de contrôler la puissance réactive générée par les onduleurs pour faire démarrer la machine électrique et seulement pour la faire démarrer. Il est ainsi exploité la capacité des onduleurs, une fois démarrés, à échanger de la puissance réactive. Cela est notamment permis par le fait que les onduleurs sont souvent pourvus d'une pilotage déphasage courant/tension.

Un tel contrôle est totalement différent d'une consigne suivie par des onduleurs suite à un signal reçu par un réseau électrique.

Selon des modes de réalisation particuliers, le procédé de démarrage présente une ou plusieurs des caractéristiques suivantes, prise(s) isolément ou selon toutes les combinaisons techniquement possibles :
- le procédé comporte, en outre, une étape d'application d'une rampe de courant sur la machine électrique par l'onduleur de l'au moins une batterie.
- une capacité d'apport en puissance réactive est définie pour l'onduleur de l'au moins une batterie, le procédé comportant, en outre, une étape de détection d'un besoin supérieur à la capacité d'apport en puissance réactive de l'onduleur de l'au moins une batterie, l'étape d'apport étant déclenchée en fonction du besoin détecté.
- le procédé comporte une étape de réception d'un ordre de démarrage de la machine électrique, l'étape d'apport étant déclenchée à réception de l'ordre de démarrage.
- le système comporte, en outre, une alimentation auxiliaire supplémentaire, le procédé comportant également une étape de connexion de l'alimentation auxiliaire supplémentaire à la machine électrique pour apporter de la puissance réactive supplémentaire à la machine électrique.
- l'alimentation auxiliaire supplémentaire est un onduleur d'une cellule photovoltaïque, un groupe électrogène ou un électrolyseur.
- l'étape d'apport de puissance réactive à la machine électrique comporte le démarrage et l'arrêt de l'onduleur de la pile à combustible.
- la machine électrique est une génératrice d'une éolienne.

La description se rapporte également à un système d'alimentation en énergie électrique comprenant un bloc de pile à combustible comprenant une pile à combustible et un onduleur de la pile à combustible, un dispositif de stockage d'énergie batterie comportant au moins une batterie et un onduleur de l'au moins une batterie, l'onduleur de l'au moins une batterie alimentant en puissance réactive une machine électrique. Le système d'alimentation en énergie électrique comporte une unité de démarrage contrôle propre à entraîner le démarrage de la machine électrique en apportant de la puissance réactive additionnelle à la machine électrique à l'aide de l'onduleur de la pile à combustible.

La description concerne aussi une installation comportant une machine électrique et un système d'alimentation en énergie électrique tel que précédemment décrit.

Dans la présente description, l'expression « propre à » signifie indifféremment « adapté pour », « adapté à » ou « configuré pour ».

Des caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'une installation comportant une éolienne et un système d'alimentation en énergie électrique, et
- la figure 2 est un schéma-bloc de différents éléments d'une partie du système d'alimentation en énergie électrique.

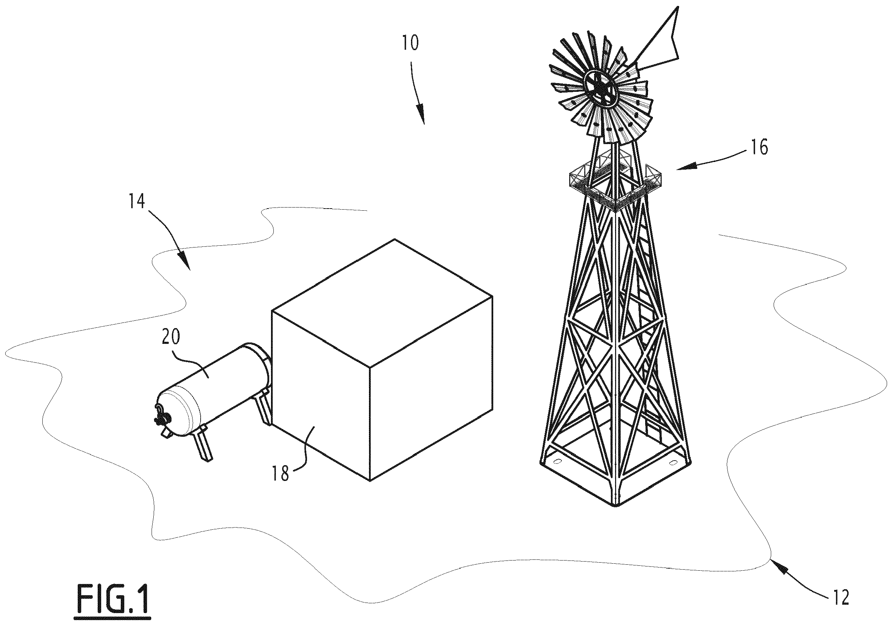

Il est représenté dans la figure 1 une installation 10.

L'installation 10 est destinée à fournir de l'électricité de manière autonome.

L'installation 10 est installée dans un endroit éloigné comme une île comme l'indique schématique la frontière 12.

L'installation 10 comporte un système d'alimentation en énergie électrique 14 et une éolienne 16.

Une éolienne 16 est un dispositif qui transforme l'énergie cinétique du vent en énergie mécanique, dite énergie éolienne, laquelle est ensuite le plus souvent transformée en énergie électrique. Pour une telle transformation, l'éolienne 16 comporte deux génératrices, à savoir une génératrice de petite puissance (pour les vents faibles) et une génératrice de grande puissance (pour les vents élevés), ainsi qu'une partie mécanique incluant notamment des pâles exposées au vent.

L'éolienne 16 comporte également un contrôleur permettant de contrôler aussi bien la génératrice que la partie mécanique. A titre d'exemple, le contrôleur est capable de gérer l'angle entre le vent et les pâles (parfois appelé selon la dénomination anglaise correspondante de « pitch ») pour que cet angle ne dépasse pas une valeur prédéfinie.

Bien qu'une seule éolienne 16 est représentée sur la figure 1, il est envisageable d'en utiliser plusieurs pour former une unité de production groupée. Dans ce cas, les termes « centrale éolienne », « parc éolien » ou « ferme éolienne » sont utilisés pour décrire une telle unité.

L'éolienne 16 est alimentée par le système d'alimentation en énergie électrique 14 qui est désigné système 14 dans la suite.

Le système 14 comporte une structure 18 et un réservoir à hydrogène 20.

La structure 18 est posée ou fixée au sol et comprend des parois latérales et un toit définissant un espace intérieur.

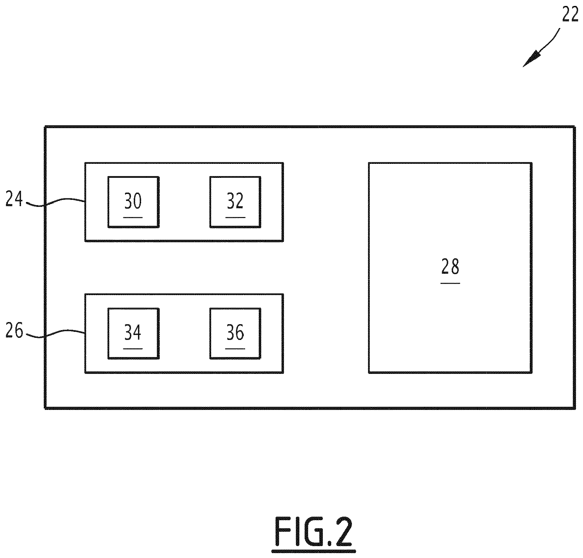

Dans cet espace intérieur, différents éléments du système 14 sont présents parmi lesquels ceux représentés sur la figure 2 qui présente une partie 22 du système 14.

En référence à cette figure, le système 14 comporte un bloc pile à combustible 24, un dispositif de stockage d'énergie batterie 26 et une unité de contrôle 28.

Le bloc pile à combustible 24 comporte une pile à combustible 30 et un onduleur 32.

Une pile à combustible 30 est un générateur dans lequel la fabrication de l'électricité se fait grâce à l'oxydation sur une électrode d'un combustible réducteur couplée à la réduction sur l'autre électrode d'un oxydant.

Autrement formulé, la pile à combustible 30 est une unité génératrice électrochimique à combustible gazeux.

Selon l'exemple décrit, le combustible est du dihydrogène et l'oxydant est le dioxygène. Le dihydrogène utilisé comme combustible est stocké dans le réservoir 40.

Plus précisément, la pile à combustible est une pile utilisant la technologie à membrane d'échange de protons (plus souvent désignée sous l'abréviation PEM renvoyant à la dénomination anglaise de « Proton Exchange Membrane »).

L'onduleur 32 permet d'ajuster la tension générée par la pile à combustible 30.

Dans la suite, l'onduleur 32 est appelé « premier onduleur 32 ».

Le dispositif de stockage d'énergie batterie 26 est parfois dénommé BESS en référence à l'abréviation de dénomination anglaise de « Battery Energy Storage System ».

Selon l'exemple décrit, le dispositif de stockage d'énergie batterie 26 comporte plusieurs batteries 34 et un onduleur 36.

L'onduleur 36 est appelé « deuxième onduleur 36 » dans la suite de la description pour ne pas le confondre avec le premier onduleur 32.

Les batteries 34 permettent de stocker l'énergie de la pile à combustible 30 qui n'est pas consommée par l'ensemble des charges et de la relâcher lorsque l'énergie de la pile à combustible 30 devient insuffisante.

Les batteries 34 sont, par exemple, des batteries de type lithium-ion pour garantir une bonne longévité du système 14.

Le deuxième onduleur 36 sert à convertir une tension continue en une tension alternative.

Le deuxième onduleur 36 alimente en puissance réactive l'éolienne 16.

L'éolienne 16 met en jeu deux formes de puissance, à savoir la puissance active et la puissance réactive.

La puissance active consommée (généralement exprimée en kWh) se transforme intégralement en puissance mécanique (travail) et en chaleur (pertes) alors que la puissance électrique réactive consommée (généralement exprimée en kVar) sert essentiellement à l'alimentation des circuits magnétiques de l'éolienne 16.

Dans l'exemple décrit, le deuxième onduleur 36 applique une rampe de courant sur l'éolienne 16 lors du démarrage puis applique un courant constant.

L'étude des coupures de courant dans l'installation 10 par la demanderesse ont montré que ces coupures de courant sont liées à une demande en courant que le dispositif de stockage d'énergie batterie 26 ne peut pas fournir.

Il convient de noter que cela a demandé une vraie analyse de chacune de ces coupures car il n'est pas possible de différencier un vrai court-circuit sur le système 14 d'un problème de demande en courant trop important pour les capacités des éléments du système 14.

Ces cas ont lieu lorsque l'éolienne 16 demande un fort apport en puissance réactive. De fait, de forts demandes en puissance réactive peuvent entraîner de fortes variations du plan de tension, voire un effondrement du système 14 complet en cas de dépassement du courant apparent maximal autorisé par le dispositif de stockage d'énergie batterie 26.

Dans l'exemple décrit, cela est spécifiquement le cas de la magnétisation de la génératrice de l'éolienne 16, c'est-à-dire lors du démarrage de la grande génératrice asynchrone de l'éolienne 16 (via son démarreur statique).

Naturellement, la demanderesse a songé à augmenter la capacité d'apport en puissance réactive du dispositif de stockage d'énergie batterie 26. Une telle augmentation est notamment obtenue aisément en ajoutant des batteries 34.

Toutefois, outre de surdimensionnement prévisible, des tests de la demanderesse ont montré que le problème perdure du fait que l'éolienne 16 dépend également de conditions extérieures et notamment de la vitesse du vent et de la présence ou non de turbulences dans le flux d'air incident.

Là encore, il conviendrait d'augmenter encore la capacité d'apport en puissance réactive du dispositif de stockage d'énergie batterie 26.

Il est ainsi parvenu à une taille de dispositif de stockage d'énergie batterie 26 peu raisonnable pour ce type d'application.

Aussi, pour remédier à ces problèmes, le présent système 10 comporte l'unité de contrôle 28 qui est propre à entraîner le démarrage de l'éolienne 16 en apportant de la puissance réactive additionnelle à la machine électrique 16 à l'aide du premier onduleur 32, c'est-à-dire l'onduleur de la pile à combustible 30.

Un tel apport est, par exemple, obtenu en effectuant un démarrage et un arrêt du premier onduleur 32.

Pour déterminer l'instant où l'unité de contrôle 28 demande le démarrage du premier onduleur 32, il peut être envisagé que l'unité de contrôle 28 reçoit un ordre de démarrage de l'éolienne 16, le démarrage étant déclenchée à réception de l'ordre de démarrage.

En variante ou en complément, l'unité de contrôle 28 détecte un besoin en puissance réactive supérieur à la capacité d'apport en puissance réactive du deuxième onduleur 36, le démarrage étant déclenchée en fonction du besoin détecté.

Concernant l'instant d'arrêt de l'onduleur 32, l'unité de contrôle 28 peut, par exemple, utiliser un temps prédéfini inférieur à 5 minutes. Un temps de 2 minutes est généralement satisfaisant.

Plus généralement, l'unité de contrôle 28 sert à contrôler l'ensemble des éléments du système 14 et est en liaison avec le contrôleur de l'éolienne 16 pour obtenir les informations de fonctionnement de l'éolienne 16 et notamment ses besoins en énergie.

Une telle interaction entre le contrôleur de l'éolienne 16 et l'unité de contrôle 28 est maintenant décrite en référence à un exemple. Il est supposé que l'éolienne 16 fonctionne initialement sur sa petite génératrice (génératrice de fonctionnement normal). A un certain moment, l'unité de contrôle 28 identifie qu'il serait intéressant d'avoir plus de puissance et voudrait enclencher la génératrice de grande puissance. L'unité de contrôle 28 envoie alors une commande au premier onduleur 32 pour que celui-ci fournisse une puissance réactive de 100 kVar puis envoie la commande au contrôleur de l'éolienne 16 d'enclencher la génératrice de démarrage. Une fois celle-ci en route, le contrôleur de l'éolienne 16 envoie l'information à l'unité de contrôle 18 qui peut alors donner l'ordre à au premier onduleur 32 d'arrêter de fournir 100 kVar.

Le système 14 permet ainsi d'utiliser le premier onduleur 32 pour démarrer l'éolienne 16, c'est-à-dire ici magnétiser sa génératrice.

En pratique, les tests de la demanderesse ont montré que la fourniture de puissance réactive préalablement à la demande élève le plan de tension. Dans les tests effectués, l'éolienne 16 est parvenue à démarrer bien qu'il ait été observé une perte du premier onduleur 32 juste après la demande en puissance réactive.

La demanderesse attribue cela à un problème de régulation de tension mais, cette perte momentanée du premier onduleur 32 n'est pas gênante pour l'utilisateur dans la mesure où aucune coupure n'a lieu au niveau du système 14 et que l'éolienne 16 a démarré.

Le premier onduleur 32 peut ainsi être vu comme un support réactif de soutien pour le système 14 en cas de demande de puissance réactive ponctuelle.

Cette magnétisation s'ajoute à celle déjà effectuée par l'onduleur 36 des batteries 34.

Comme usuellement le premier onduleur 32 d'une pile à combustible 34 est uniquement utilisé pour les conversions de puissances actives, une telle utilisation du premier onduleur 32 de la pile à combustible 30 permet de diminuer le dimensionnement du dispositif de stockage d'énergie batterie 26, et notamment du deuxième onduleur 36.

Autrement formulé, lors du démarrage, le deuxième onduleur 36 n'a plus à fournir autant de puissance réactive qu'initialement prévu du fait de l'entraide entre le premier onduleur 32 et le deuxième onduleur 36.

La diminution du besoin en puissance réactive pouvant être atteinte dans le cas décrit est de l'ordre de 100 kVar.

Cette diminution rend le système 14 bien adapté pour des usages en zones lointaines privées d'un réseau électrique local.

Le principe qui vient d'être décrit pour une éolienne 16 est également valable pour tout autre type de machine électrique 16 ayant un besoin fort en puissance réactive au démarrage.

A titre d'exemple de telle machine électrique, on peut citer un moteur ou un transformateur.

En variante ou en complément, le système 14 comporte, en outre, une alimentation auxiliaire supplémentaire et lors du démarrage, l'alimentation auxiliaire supplémentaire est connecté à la machine électrique 16 pour apporter de la puissance réactive supplémentaire à la machine électrique 16.

A titre d'exemple, l'alimentation auxiliaire supplémentaire est un onduleur d'une cellule photovoltaïque, un groupe électrogène ou un électrolyseur.

## Revendications

1. Procédé de démarrage d'une machine électrique (16), la machine électrique (16) étant alimentée en puissance réactive par un onduleur (36) d'au moins une batterie (34), le procédé comportant :
- lors du démarrage de la machine électrique (16), une étape d'apport en puissance réactive additionnelle à la machine électrique (16) à l'aide d'un onduleur (32) d'une pile à combustible (30),
l'onduleur (32) de la pile à combustible (30) et la pile à combustible (32) formant un bloc de pile à combustible (24), l'au moins une batterie et l'onduleur (36) de l'au moins une batterie (34) formant un dispositif de stockage d'énergie batterie (26), le bloc de pile à combustible (24) et le dispositif de stockage d'énergie batterie (26) faisant partie d'un même système d'alimentation en énergie électrique (14).

2. Procédé selon la revendication 1, dans lequel le procédé comporte, en outre, une étape d'application d'une rampe de courant sur la machine électrique (16) par l'onduleur (36) de l'au moins une batterie (34).

3. Procédé selon la revendication 1 ou 2, dans lequel une capacité d'apport en puissance réactive est définie pour l'onduleur (36) de l'au moins une batterie (34), le procédé comportant, en outre, une étape de détection d'un besoin supérieur à la capacité d'apport en puissance réactive de l'onduleur (36) de l'au moins une batterie (34), l'étape d'apport étant déclenchée en fonction du besoin détecté.

4. Procédé selon la revendication 1 ou 2, dans lequel le procédé comporte une étape de réception d'un ordre de démarrage de la machine électrique (16), l'étape d'apport étant déclenchée à réception de l'ordre de démarrage.

5. Procédé selon l'une quelconque des revendications 1 à 4, dans lequel le système (14) comporte, en outre, une alimentation auxiliaire supplémentaire, le procédé comportant également une étape de connexion de l'alimentation auxiliaire supplémentaire à la machine électrique (16) pour apporter de la puissance réactive supplémentaire à la machine électrique (16).

6. Procédé selon la revendication 5, dans lequel l'alimentation auxiliaire supplémentaire est un onduleur d'une cellule photovoltaïque, un groupe électrogène ou un électrolyseur.

7. Procédé selon l'une quelconque des revendications 1 à 6, dans lequel l'étape d'apport de puissance réactive à la machine électrique (16) comporte le démarrage et l'arrêt de l'onduleur (32) de la pile à combustible (30).

8. Procédé selon l'une quelconque des revendications 1 à 7, dans lequel la machine électrique (16) est une génératrice d'une éolienne.

9. Système d'alimentation en énergie électrique (14) comprenant :
- un bloc de pile à combustible (24) comprenant une pile à combustible (30) et un onduleur (32) de la pile à combustible (30),
- un dispositif de stockage d'énergie batterie (26) comportant au moins une batterie (34) et un onduleur (36) de l'au moins une batterie (34), l'onduleur (36) de l'au moins une batterie (34) alimentant en puissance réactive une machine électrique (16), et
- une unité de contrôle (28) propre à entraîner le démarrage de la machine électrique en apportant de la puissance réactive additionnelle à la machine électrique (16) à l'aide de l'onduleur (32) de la pile à combustible (30).

10. Installation (10) comportant une machine électrique (16) et un système d'alimentation en énergie électrique (14) selon la revendication 9.
